(19) Europäisches Patentamt

European Patent Office

Office européen des brevets

(11) Veröffentlichungsnummer: **0 646 766 A2**

(12) **EUROPÄISCHE PATENTANMELDUNG**

(21) Anmeldenummer: **94114311.7**

(22) Anmeldetag: **12.09.94**

(51) Int. Cl.⁶: $G01B\ 9/02$

(30) Priorität: **30.09.93 DE 4333423**

(43) Veröffentlichungstag der Anmeldung:
**05.04.95 Patentblatt 95/14**

(84) Benannte Vertragsstaaten:
**DE FR GB IT**

(71) Anmelder: **FRAUNHOFER-GESELLSCHAFT ZUR FÖRDERUNG DER ANGEWANDTEN FORSCHUNG E.V.**
**Leonrodstrasse 54**
**D-80636 München (DE)**

(72) Erfinder: **Werle, Peter, Dr.**
**Zugspitzstrasse 7**
**D-82490 Farchant (DE)**

(74) Vertreter: **Kruspig, Volkmar, Dipl.-Ing.**
**Patentanwälte**
**Meissner, Bolte & Partner**
**Postfach 86 06 24**
**D-81633 München (DE)**

(54) **Verfahren und Anordnung zur Absolutinterferometrie mit durch Diodenlaser erzeugter Strahlung.**

㊗ Mit dem erfindungsgemäßen Verfahren und der zur Durchführung des Verfahrens angegebenen Anordnung zur Absolutinterferometrie mit durch Diodenlaser erzeugter Strahlung können relative oder absolute Abstandsmessung ohne Referenzinterferometer mit nur einem einzigen Detektor und hoher Genauigkeit der Meßstreckenbestimmung durchgeführt werden. Der Grundgedanke der Erfindung besteht darin, die mittels des Diodenlasers erzeugte Strahlung derart zu modulieren, daß dem Diodenlaser mindestens eine diskrete Frequenz aufgeprägt wird, die dann mit einem an sich bekannten phasenempfindlichen Detektionsverfahren nachgewiesen wird. Durch die Modulation der ursprünglichen Strahlung des Diodenlasers wird quasi ein zweiter Laserstrahl erzeugt, so daß in einem einzigen Strahlengang ein Meß- und Referenzstrahl resultieren. Beide Strahlen, d. h. der Meß- und der Referenzstrahl besitzen jeweils eine andere Frequenz, weisen jedoch parallele Wellenfronten auf, legen im einheitlichen Strahlengang einen exakt gleichen optischen Weg zurück und interferieren auf dem einzigen Detektor. Die Bestimmung der Meßstrecke erfolgt dann durch die vorerwähnte Ermittlung der Phasenverschiebung bzw. die Ermittlung der Phasenänderung des Modulationssignals. Alternativ erfolgt eine Veränderung der Modulationsfrequenz des Diodenlasers so lange, bis mittels des Detektors eine vorgegebene Phasenverschiebung zwischen dem ursprünglichen ersten Strahl des Diodenlasers und den durch Modulation erzeugten zweiten Strahl mit geänderter Frequenz festgestellt wurde bzw. durchlaufen ist. Durch Bestimmung der Modulationsfrequenz, bei welcher die vorgegebene Phasenverschiebung erreicht ist und Differenzbildung zur Ausgangsmodulationsfrequenz kann auf die absolute Größe der Meßstrecke geschlossen werden.

EP 0 646 766 A2

Die Erfindung betrifft ein Verfahren und eine Anordnung zur Absolutinterferometrie mit durch Diodenlaser erzeugter Strahlung nach den Patentansprüchen 1, 4 und 9.

Es ist bekannt, auf der Basis der Absolutinterferometrie mit durchstimmbaren Halbleiterlasern Abstände statisch ohne Verschieben eines Meßreflektors, wie dies bei Michelson-Interferometern erforderlich ist, zu bestimmen. Bei der Absolutinterferometrie mit durchstimmbaren Halbleiterlasern wird durch eine kontinuierliche Wellenlängenänderung des Lasers eine Änderung der Interferenzphase hervorgerufen. Diese Phasenänderung wird zu einer Phasenänderung in Beziehung gesetzt, die in einem Referenzinterferometer mit konstanter Länge gemessen wird. Aus der Kenntnis der Referenzstreckenlänge läßt sich dann der absolute Abstand zwischen Detektor und Reflektor berechnen.

Ein derartiges absolutinterferometrisches Verfahren wurde beispielsweise von T. Pfeifer und J. Thiel in "Technisches Messen" 60 (1993), Heft 5, S. 185 bis 191 beschrieben.

Bei der absolutinterferometrischen Messung wird die Wellenläge eines Halbleiterlasers kontinuierlich durchgestimmt, wobei die Laserwellenlänge ohne Modensprung beispielsweise von $\lambda_1$ nach $\lambda_2$ geändert wird. Eine derartige Durchstimmung kann bei der Verwendung von Halbleiterlasern beispielsweise dadurch erfolgen, daß ein unterschiedlicher Injektionsstrom eingestellt wird. Für einen gegebenen Absolutabstand $L_{abs}$ des Meßspiegels gelten für die Wellenlängen $\lambda_1$ und $\lambda_2$ folgende Beziehungen:

$$L_{abs} = (m_1 + \varphi_1)\ \lambda_1/2 = \phi_1\ \lambda_1/2$$

$$L_{abs} = (m_2 + \varphi_2)\ \lambda_2/2 = \phi_2\ \lambda_2/2$$

Nach Multiplikation der oben genannten Gleichungen mit der jeweils anderen Wellenlänge und anschließender Subtraktion ergibt sich:

$$L_{abs} = (\phi_1 - \phi_2) \cdot \frac{1}{2} \cdot \frac{\lambda_1 \cdot \lambda_2}{\lambda_2 - \lambda_1} = \Delta\phi \cdot \frac{\Lambda_S}{2}$$

mit

$$\Lambda_S = \frac{\lambda_1 \cdot \lambda_2}{\lambda_2 - \lambda_1}$$

wobei $\Lambda_S$ die Schwebungswellenlänge darstellt.

Da die Wellenlängen $\lambda_1$ und $\lambda_2$ vom jeweils verwendeten Halbleiterlaser nicht ohne weitere Maßnahmen exakt reproduzierbar eingestellt werden können, variiert die Schwebungswellenlänge $\Lambda_S$. Sie variiert deshalb so stark, da in ihre Berechnung die geringe Wellenlängedifferenz ($\lambda_2 - \lambda_1$) im Nenner eingeht.

Beim bekannten Stand der Technik ist es daher erforderlich, einen Längenvergleich mit einem Referenzinterferometer konstanter Länge durchzuführen.

Dieses bekannte absolutinterferometrische Verfahren mit einem zusätzlichen Referenzinterferometer mit konstanter Länge basiert darauf, während der kontinuierlichen Wellenlängendurchstimmung die Interferenzphasenänderung sowohl in dem Meß- als auch in dem Referenzinterferometer zu detektieren. Wenn die Länge der Referenzstrecke $L_{ref}$ bekannt ist, so ergibt sich der Meßabstand $L_{abs}$ aus der Phasenänderung der Referenzstrecke $\phi_{ref}$ und der Phasenänderung der Meßstrecke $\phi_{abs}$ nach folgender Beziehung

$$L_{abs} = L_{ref}\ \frac{\Delta\phi_{abs}}{\Delta\phi_{ref}}$$

2

Bei diesem Verfahren ist die Kenntnis der Wellenlängen und des Abstandes Δλ nicht erforderlich und die Meßunsicherheit wird lediglich von der Genauigkeit der Phasenmessung und der Bestimmung der Referenzstreckenlänge abhängig.

Es gilt allerdings, daß mit einer Vergrößerung des Durchstimmbereiches der Laserwellenlänge die relative Unsicherheit der Phasenmessung geringer wird.

Der Durchstimmbarkeit eines Halbleiterlasers sind jedoch, je nach konkreter Realisierungsform des pn-Übergangs und des Laserresonators, Grenzen gesetzt.

Die Realisierung des oben beschriebenen absolutinterferometrischen Verfahrens ist aufgrund der Notwendigkeit eines Referenzinterferometers bzw. einer Referenzstrecke mit einem erhöhten optisch-mechanischem Aufwand verbunden.

Es ist daher Aufgabe der Erfindung, ein Verfahren und eine Anordnung zur Absolutinterferometrie mit durch Diodenlaser erzeugter Strahlung anzugeben, welches eine relative oder absolute Abstandsmessung ohne Referenzinterferometer ermöglicht, wobei die Schwebungswellenlänge $\Lambda_S$ konstant ist und das die Voraussetzung für eine hoch aufgelöste Phasenmessung mit entsprechender genauer Meßstreckenbestimmung schafft.

Die Lösung der Aufgabe der Erfindung erfolgt mit den Merkmalen der Patentansprüche 1, 4 und 9, wobei die Unteransprüche vorteilhafte Ausgestaltungen und Weiterbildungen der Erfindung umfassen.

Der Grundgedanke der Erfindung besteht darin, die mittels eines Diodenlasers erzeugte Strahlung derart zu modulieren, daß dem Diodenlaser mindestens eine diskrete Frequenz aufgeprägt wird, die dann mit einem an sich bekannten phasenempfindlichen Detektionsverfahren nachgewiesen wird. Durch die Modulation der ursprünglichen Strahlung des Diodenlasers wird quasi ein zweiter Laserstrahl erzeugt, so daß in einem einzigen Strahlengang ein Meß- und Referenzstrahl resultieren. Beide Strahlen besitzen jeweils eine andere Frequenz, weisen jedoch parallele Wellenfronten auf und legen exakt den gleichen optischen Weg zurück und interferieren auf einem einzigen Detektor.

Bei der vorerwähnten Modulation wird der Diodenlaser bzw. die Trägerfrequenz des Lasers derart moduliert, daß im Frequenzbereich im Abstand der Modulationsfrequenz mindestens ein Seitenband entsteht. Die Schwebungswellenlänge hängt damit nur noch von der Modulationsfrequenz ab, die mit bekannten Frequenzgeneratoren, z. B. Quarzoszillatoren sehr präzise und genau vorgegeben werden kann.

Es wird also bei der Erfindung in neuartiger Weise ein absolutinterferometrisches Verfahren vorgestellt, bei dem die Phasenverschiebung eines Modulationssignals gemessen wird und der Diodenlaser bzw. die durch ihn erzeugte Strahlung nur Trägerfunktion hat und die Meßstrecke eindeutig festlegt. Es liegt im Sinne der Erfindung, daß das Verfahren mit und ohne Reflektorspiegel realisiert werden kann, wobei im Falle des Verzichtes auf einen Reflektorspiegel die Meßstrecke durch den Abstand zwischen Diodenlaser und Detektor definiert ist.

Es liegt ebenfalls im Sinne der Erfindung, eine Intensitätsnormierung der gemessenen Signale auf die Lichtleistung am Detektor vorzusehen, um eine Beeinflussung der Messung durch unerwünschte Absorptionen im optischen Strahlengang auszuschließen.

Mit dem erfindungsgemäßen Verfahren und der zur Realisierung des Verfahrens angegebenen Anordnung wird also entgegen dem eingangs beschriebenen Stand der Technik eine konstante Schwebungswellenlänge $\Lambda_S$ erreicht. Durch eine hochaufgelöste Phasenmessung $\Delta\phi$, die nur durch Rauschen bzw. Quantisierungsfehler eines verwendeten Analog-Digital-Wandlers begrenzt ist, kann eine erhebliche Erhöhung der Meßgenauigkeit erreicht werden. Durch den Fortfall eines ansonsten notwendigen Durchstimmens des Diodenlasers sind Fehler, die durch Fluktuationen oder Parameteränderungen während der Durchstimmzeit entstehen, von vornherein ausgeschlossen. Es könnten also Relativmessungen bei konstanten Systemparametern, wie Laserstrom, Lasertemperatur und Lasermodulation durchgeführt werden, da nur ein elektronisches Vermessen einer Phasenänderung erforderlich ist.

Absolutmessungen werden durch eine Veränderung der Modulationsfrequenz über einen vorgegebenen Bereich durchgeführt, wobei die Bestimmung des absoluten Abstandes dann auf die Messung der Frequenz, die mit bekannten Methoden hochgenau möglich ist, zurückgeführt wird. Eine notwendige Richtungsdetektion erfolgt vorteilhaft durch elektronische Erzeugung von 90°, 180° und/oder 270° phasenverschobenen Signalen und mit nur einem einzigen Detektor.

Die Erfindung soll anhand von Ausführungsbeispielen und Figuren näher erläutert werden.

Hierbei zeigen:

Fig. 1    eine prinzipielle Anordnung zur Bestimmung der Änderung der Größe einer Meßstrecke bzw. Entfernung auf der Basis des erfindungsgemäßen absolutinterferometrischen Verfahrens;

Fig. 2    eine prinzipielle Anordnung zur Bestimmung der Änderung der Größe einer Meßstrecke bzw. Entfernung unter gleichzeitiger Bestimmung der Änderungsrichtung; und

Fig. 3    eine prinzipielle Anordnung zur Bestimmung der absoluten Größe einer Meßstrecke auf der Basis des erfindungsgemäßen absolutinterferometrischen Verfahrens mit veränderlicher Modulation.

Bei der Anordnung zur Bestimmung der Änderung der Größe einer Meßstrecke bzw. Entfernung auf der Basis des erfindungsgemäßen Verfahrens wird ein Diodenlaser 1 über eine Steuereinheit 2 hinsichtlich Injektionsstrom, Temperatur und pn-Übergang betrieben. Die Laserstrahlung des Diodenlasers 1 gelangt auf z. B. einen (Retro)Reflektor 3 und von dort zurück auf einen Detektor 4. Die Meßstrecke L ist durch den Abstand zwischen (Retro)Reflektor 3 und Detektor 4 definiert. Der Diodenlaser 1 wird über einen Modulator 5 frequenzmoduliert. Die Modulation der Strahlung $\nu l$ des Diodenlasers erfolgt derart, daß im Frequenzbereich im Abstand der Modulationsfrequenz $\nu m$ mindestens ein Seitenband $\nu s$ entsteht. Durch die derart erfolgende Modulation wird neben dem ursprünglichen ersten Strahl ein virtueller, zweiter Strahl mit geänderter Frequenz, aber parallelen Wellenfronten, erzeugt, wobei der erste und der zweite Strahl jeweils den gleichen optischen Weg zurücklegen und die Strahlen auf dem Detektor 4 interferieren.

Der Ausgang des Detektors 4 steht mit dem ersten Eingang eines phasenempfindlichen Detektors 6 in Verbindung, an dessen zweiten Eingang ein Modulationsreferenzsignal aus dem Modulator 5 anliegt.

Das am Ausgang des phasenempfindlichen Detektors 6 bereitstehende Phasenänderungssignal wird mit einer Signalverarbeitungseinheit 7 derart bewertet, daß die Änderungsgröße der Meßstrecke L bestimmbar ist.

Der phasenempfindliche Detektor 6 kann beispielsweise durch einen Lock-In-Verstärker oder einen Double-Balanced-Mixer realisiert werden.

Mittels des Modulators 5 wird der Diodenlaser 1 bzw. die Trägerfrequenz $\nu l$ derart moduliert, daß im Frequenzbereich im Abstand der Modulationsfrequenz $\nu m$ mindestens ein Seitenband mit $\nu s = \nu l + \nu m$ bzw.

$$\frac{1}{\lambda_2} = \frac{1}{\lambda_1} + \frac{1}{\Lambda_S}$$

resultiert.

Demnach hängt die Schwebungswellenlänge

$$\Lambda_S = \frac{\lambda_1 \cdot \lambda_2}{\lambda_2 - \lambda_1} = \frac{c}{\nu m}$$

nur noch von der Modulationsfrequenz $\nu m$ ab, die innerhalb des Modulators 5 durch einen hochgenauen frequenzstabilisierten Generator erzeugt werden kann.

Die Genauigkeitsgrenzen der Längenbestimmung L ist gegeben durch $\Delta L_{min} = \Delta\phi_{min} \cdot \Lambda_S/2$.

Mittels phasenempfindlicher Detektion können Phasenänderungen $\Delta\phi_{min} \leq 10^{-3}$ gemessen werden. Dies ist beispielsweise durch einen 12 Bit Analog-Digital-Wandler mit einer Auflösung von 1/4096 möglich.

In der nachstenden Tabelle sind minimal detektierbare Längenänderungen bzw. Genauigkeiten für eine Phasenauflösung $\Delta\phi_{min}$ von $10^{-3}$ bzw. $10^{-4}$ als Funktion der Modulationfrequenz $\nu m$ gezeigt. Für größere oder kleinere Phasenauflösungen können die Werte entsprechend skaliert werden. Ebenso für andere Modulationsfrequenzen $\nu m$.

| $\nu_{mod}$ | $\Lambda_s$ | $\Delta L_{min}(\Delta\phi_{min} = 10^{-3})$ | $\Delta L_{min}(\Delta\phi_{min} = 10^{-4})$ |
|---|---|---|---|
| 1 MHz | 300 m | 150 mm | 15 mm |
| 10 MHz | 30 m | 15 mm | 1,5 mm |
| 100 MHz | 3 m | 1,5 mm | 150 $\mu$m |
| 1 GHz | 30 cm | 150 $\mu$m | 15 $\mu$m |
| 10 GHz | 3 cm | 15 $\mu$m | 1,5 $\mu$m |

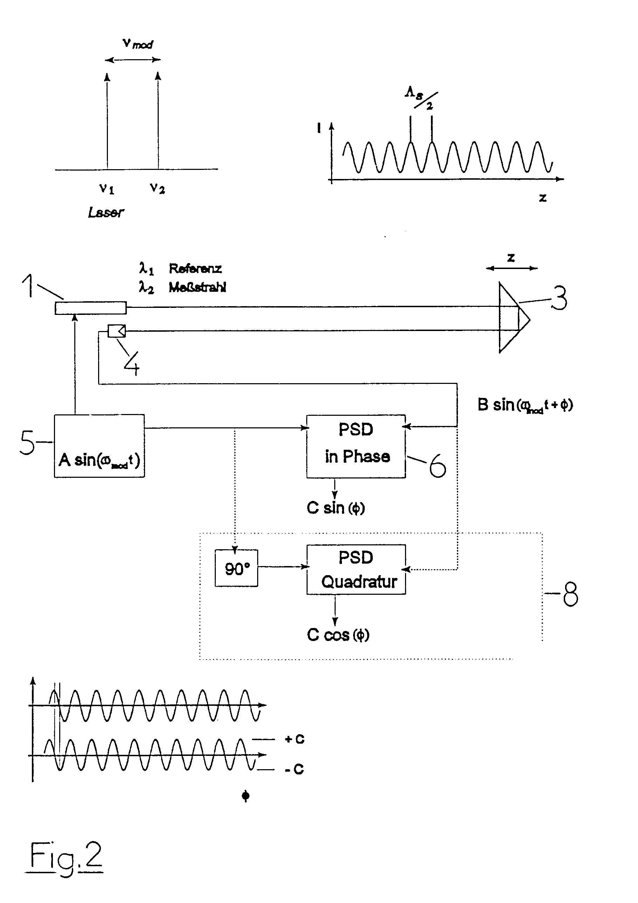

Das Ausführungsbeispiel gemäß Fig. 2 zeigt die erfindungsgemäße Anordnung zur Bestimmung der Änderung der Größe einer Meßstrecke mit Richtungsbestimmungsoption.

Die Meßstrecke ändert sich hier in Betrag und Richtung z. Ebenso wie beim ersten Ausführungsbeispiel ist ein Diodenlaser 1 vorgesehen, dessen Strahlung auf einen Retroreflektor 3 fällt und anschließend von einem Detektor 4 empfangen wird. Der Modulator 5 erzeugt ein Modulationssignal $A \cdot \sin(\omega m \cdot t)$, wobei dieses Modulationssignal wie auch beim ersten Ausführungsbeispiel zusätzlich auf den Referenzeingang, d. h. den zweiten Eingang des phasenempfindlichen Detektors 6 gelangt. Der Ausgang des Detektors 4 steht mit dem ersten Eingang des vorerwähnten phasenempfindlichen Detektors 6 in Verbindung.

Der modulierte Laserstrahl durchläuft die Meßstrecke und erzeugt auf dem Detektor 4 ein Schwebungssignal $B \cdot \sin(\omega m \cdot t + \phi)$. Dieses Signal hat eine Frequenz, die genau der Modulationsfrequenz entspricht, jedoch um den Betrag $\phi$ phasenverschoben ist. Am Ausgang des phasenempfindlichen Detektors 6 ergibt sich nach einem Mischprozeß und geeigneter Filterung ein Gleichspannungspegel $C \cdot \sin(\phi)$, der von der Phase $\phi$ abhängt. Bei einer Änderung der Phase von 0 bis $2\pi$ wird ein Gleichspannungspegel von 2C durchlaufen. Die Pegeländerung kann nach geeigneter Verstärkung entweder analog oder digital bestimmt werden und stellt die gesuchte Meßgröße dar.

Für Relativmessungen ist es notwendig, die Änderungsrichtung ebenfalls zu detektieren. Hierfür wird das Detektorausgangssignal in zwei oder mehrere gleiche Anteile aufgespalten und mehreren phasenempfindlichen Detektoren zugeführt, wobei die Referenzsignale der phasenempfindlichen Detektoren um 90, 180 oder 270° phasenverschoben sind.

In der Ausführungsform gemäß Fig. 2 ist ein zweiter phasenempfindlicher Detektor 8 vorgesehen, dessen zweiten Eingang ein Referenzsignal zugeführt wird, welches um 90° phasenverschoben ist. Am ersten Eingang des zweiten phasenempfindlichen Detektors 8 liegt das Ausgangssignal des Detektors 4 an. Durch den Vergleich der Ausgangssignale des ersten und des zweiten phasenempfindlichen Detektors 6, 8, die das In-Phase und ein Quadratur-Signal führen, kann auf elektronischem Wege die Änderungsrichtung des Betrages z bestimmt werden.

Es liegt im Sinne der Erfindung, daß auf den Retroreflektor 3 verzichtet werden kann, wobei dann die Meßstrecke durch den sich gegenüberstehenden Diodenlaser 1 und Detektor 4 definiert ist.

Vorteilhafterweise werden zur Realisierung des erfindungsgemäßen Verfahren Halbleiterlaser eingesetzt, da diese bis in den Gigahertzbereich, z. B. über den Injektionsstrom moduliert werden können.

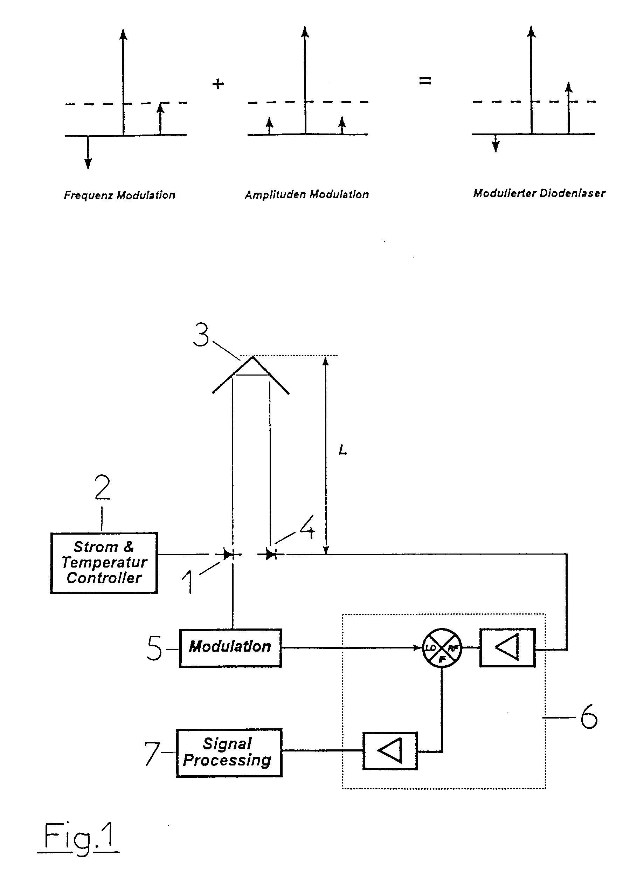

Wird z. B. eine Hochfrequenzmodulation mit einer Modulationsfrequenz von ca. 100 MHz angewendet, so wird bei einem Modulationsindex von $\beta < 1$ im Abstand der Modulationsfrequenz vom Träger je ein oberes und unteres Seitenband mit entgegengesetzter Phasenlage erzeugt. Dies ist im oberen Teil der Fig. 1 symbolisch dargestellt.

Bei einer entsprechend breitbandigen Ausführung des Detektors 4 entstehen nun Signale bei allen Frequenzmischprodukten, so auch bei der Modulationsfrequenz. Da das obere und untere Seitenband eine entgegengesetzte Phasenlage aufweisen, ergibt sich auch für die Detektorausgangsströme bei der Modulationsfrequenz eine Phasenverschiebung von 180°, so daß beide Signale sich bei einer phasenempfindlichen Detektion zu einem Netto-Null Signal aufheben.

Bei der direkten Modulation von Halbleiterlasern über den Injektionsstrom liegt jedoch, wie im bereits erwähnten oberen Bildteil der Fig. 1 symbolisch dargestellt, immer eine Kopplung von Frequenz- und Amplitudenmodulation vor. Werden über einen Modulationsstrom Ladungsträger periodisch in den pn-Übergang des Diodenlasers injiziert, ändern sich nämlich sowohl die Ladungsträgerdichte (Amplitudenmodulation) als auch der Brechungsindex im Laserresonator (Frequenzmodulation). Hieraus resultiert entsprechend den Parametern des jeweiligen Lasers eine Restamplitudenmodulation, die beim vorliegenden Verfahren aber vorteilhaft ausgenutzt wird.

In der Praxis erhält man, dargestellt mit dem oberen Bildteil der Fig. 2, eine quasi Einseitenbandmodulation durch Differenzbildung der Schwebungssignale von einerseits oberem Seitenband und Träger und andererseits dem unteren Seitenband und dem Träger. Die maximale Amplitude des Differenzsignals am Ausgang des phasenempfindlichen Detektors 4 ist Weise abhängig von der Größe der vorerwähnten Restamplitudenmodulation und wird somit zur Bildung der gesuchten Meßgröße herangezogen.

Es liegt im Sinne der Erfindung, eine Intensitätsnormierung der gemessenen Signale auf die empfangene Lichtleistung am Detektor vorzunehmen, so daß unerwünschte Absorptionen im Strahlengang nicht zu einer Verfälschung der Meßergebnisse führen.

Ebenso können mittels der Modulatoren 5 verschiedene Modulationsarten, nämlich die Einton-Modulation oder die Zweiton-Modulation, bei der der Träger mit zwei verschiedenen Frequenzen moduliert wird und eine Detektion der Differenzfrequenz erfolgt, genutzt werden.

Durch den einfachen Aufbau der in den Ausführungsbeispielen gezeigten Anordnung können kostengünstig Vibrations-Überwachungsinterferometer, z. B. an Brückenbauwerken, installiert werden.

Bei der Anordnung gemäß Fig. 1 können also Relativmessungen bei konstanten Systemparametern durchgeführt werden, da nur die Phasenänderung elektronisch bestimmt wird. Der Arbeitspunkt des Diodenlasers 1 wird über die Steuereinrichtung 2 festgelegt. Entsprechend des konkreten Anwendungsfalles wird eine geeignete Modulationsfrequenz ausgewählt. Bestimmt wird, wie dargelegt, die Phasenverschiebung $\Delta\phi$. Gemäß oben genannter Tabelle entspricht also z. B. eine gemessene Phasenverschiebung von $10^{-3}$ einer Längenänderung von 1,5 mm bei einer Modulationsfrequenz von 100 MHz und mit c Lichtgeschwindigkeit im Vakuum.

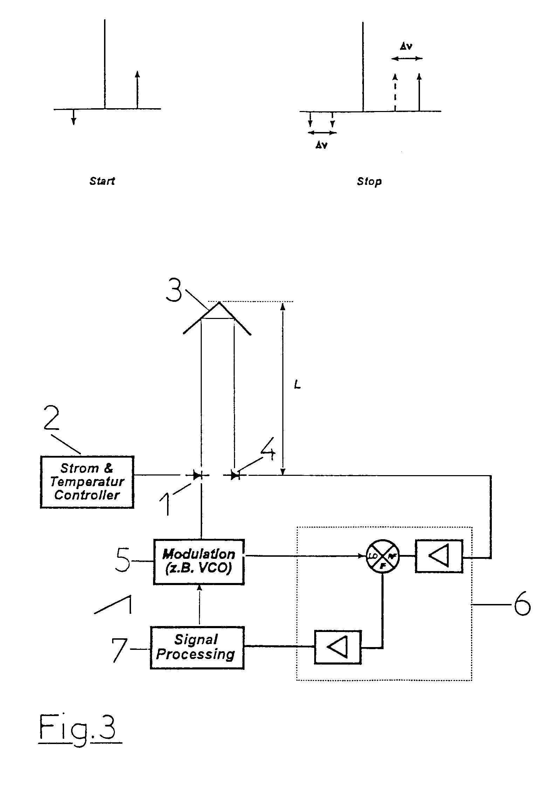

Unter Hinweis auf die Fig. 3 sei eine Anordnung erläutert, mit deren Hilfe Absolutmessungen über eine Veränderung der Modulationsfrequenz des Modulators 5 durchgeführt werden können. Die Abstandsmessung kann bei diesem Ausführungsbeispiel auf eine Frequenzmessung $\Delta\nu$ oder Phasenmessung $\Delta\phi$ zugeführt werden.

So kann z. B., wie dies mit dem oberen Teil der Fig. 3 prinzipiell dargestellt ist, die Frequenz ausgehend von $\nu_1$ so lange erhöht werden, bis eine Phase um $2\pi$ durchlaufen ist, d. h. $\Delta\phi = 1$ ist. Aus der Frequenzdifferenz $\Delta\nu = \nu_2 - \nu_1$ kann direkt auf die absolute Länge der Meßstrecke L geschlossen werden.

Die Meßstrecke L ergibt sich demnach wie folgt:

$$L = c/(2\cdot(\nu_2 - \nu_1)) = c/(2\cdot\Delta\nu).$$

Bei dieser Ausführungsform der Erfindung kann der Modulator 5 beispielsweise ein spannungsgesteuerter Oszillator (VCO) sein, welcher von der Signalverarbeitungseinheit 7 angesteuert wird.

Aus dem oben genannten ergibt sich, daß, wenn z. B. die Modulationsfrequenz von 100 MHz auf 110 MHz durchgestimmt werden muß, um eine Phase von $2\pi$ zu durchlaufen, die erforderliche Frequenzänderung einer Weglänge von 14,99 m entspricht. Die Genauigkeit der Bestimmung der Weglänge hängt dabei entsprechend dem anmeldungsgemäßen Prinzip lediglich von der Genauigkeit der Phasenmessung mittels des phasenempfindlichen Detektors 6 ab. Besonders vorteilhaft ist, wenn eine Mittelung über mehrere Phasen unter Nutzung der Signalverarbeitungseinheit 7 durchgeführt wird.

Wenn ein fester Frequenzhub $\Delta\nu$ vorgegeben ist, läßt sich die Länge bei Kenntnis des festen Frequenzhubes auch unmittelbar aus der Phasenmessung $\Delta\phi$ bestimmen.

Bei den gezeigten Ausführungsbeispielen kann die Änderung der Größe der Meßstrecke zwischen Diodenlaser und Reflektor pro Zeiteinheit erfaßt werden. Hieraus kann dann die Bewegungsgeschwindigkeit zwischen Diodenlaser 1 und Reflektor 3 ermittelt werden. Des weiteren kann in Verbindung mit einem Scanner ein Meßobjekt dreidimensional abgetastet und dessen Oberflächenkonfiguration bestimmt werden.

Mittels der Erfindung ist es also in überraschender Weise möglich, ohne Verwendung eines Referenzinterferometers relative oder absolute Abstandsmessungen bei Anwendungen von Modulationstechniken und phasenempfindlicher Detektion durchzuführen. Insbesondere Relativmessungen können bei konstanten Systemparametern des verwendeten Diodenlasers erfolgen, wodurch der Aufbau auf ein derartiges Prinzip zurückgehender Meßanordnungen deutlich vereinfacht wird und sich durch kostengünstige Meßanordnungen neue Anwendungsgebiete erschließen. Über das unkritische Durchstimmen der Modulationsfrequenz bei gleichzeitiger Frequenzmessung und Bestimmung der Phasenänderung kann die Bestimmung der Größe einer Meßstrecke auf eine einfache, in bekannter Weise realisierbare Frequenzmessung zurückgeführt bzw. reduziert werden.

Mittels der Erfindung sind also absolutinterferometrische Messungen auf der Basis einer durch Diodenlaser erzeugten Strahlung ohne separaten Referenzstrahlengang und ohne Referenzdetektor in hoher Genauigkeit möglich. Die Messung und Auswertung selbst erfolgt mit rein elektronischen Mitteln, d. h. ohne mechanisch bewegte Teile, wie diese bei einem herkömmlichen Michelson-Interferometer notwendig sind.

**Patentansprüche**

1. Verfahren zur Absolutinterferometrie mit durch Diodenlaser erzeugter Strahlung, wobei die Änderung der Größe einer Meßstrecke oder Entfernung zwischen dem Diodenlaser und einem Reflektor mittels eines Detektors durch folgende Schritte bestimmt wird:
   - hochfrequente Modulation der Strahlung $\nu l$ des Diodenlasers derart, daß im Frequenzbereich im Abstand einer Modulationsfrequenz $\nu m$ mindestens ein quasi resultierendes Seitenband $\nu s$ mit $\nu s = \nu l + \nu m$ entsteht, wobei der Diodenlaser neben dem ursprünglichen ersten Strahl quasi simultan einen zweiten Strahl mit geänderter Frequenz, aber parallelen Wellenfronten, erzeugt, wobei der erste und der zweite Strahl jeweils den gleichen optischen Weg innerhalb eines einzigen optischen Strahlenganges zurücklegen und die Strahlen auf dem Detektor interferieren,

- in an sich bekannter Weise erfolgende Ermittlung der Phasenverschiebung $\Delta\phi$ bzw. der Phasen-änderung zwischen dem Detektorsignal und einem Modulationsreferenzsignal als Maß für die Änderung der Meßstrecke oder Entfernung.

2. Verfahren nach Anspruch 1,
**dadurch gekennzeichnet**,
daß die Änderung der Meßstrecke oder Entfernung $\Delta L$ wie folgt bestimmt wird:

$$\Delta L = \Delta\phi \bullet c/(2 \bullet \nu m),$$

wobei c gleich der Lichtgeschwindigkeit im Medium ist.

3. Verfahren nach Anspruch 1,
**dadurch gekennzeichnet**,
daß für Relativmessungen eine Bestimmung der Verschiebungsrichtung durch elektronisches Aufspalten des Ausgangssignals des Detektors erfolgt, wobei das in gleiche Anteile aufgespaltene Signal mindestens zwei phasenempfindlichen Detektoren zugeführt wird und wobei die Referenzsignale der phasenempfindlichen Detektoren um 90 bzw. 180 oder 270 ° phasenverschoben sind, so daß ein In-Phase und eine Quadratursignal zur Verschiebungsrichtungsbestimmung entsteht.

4. Verfahren zur Absolutinterferometrie mit durch Diodenlaser erzeugter Strahlung, wobei die absolute Größe einer Meßstrecke bzw. Entfernung zwischen dem Diodenlaser und einem Reflektor mittels eines Detektors durch folgende Schritte bestimmt wird:
   - Modulation und Veränderung der Modulationsfrequenz von $\nu1$ nach $\nu2$ so lange, bis mittels des Detektors eine Phasenverschiebung von vorzugsweise $2\pi$ bzw. $\Delta\phi = 1$ zwischen dem ursprüngli-chen ersten Strahl des Diodenlasers und einem durch Modulation erzeugten zweiten Strahl mit geänderter Frequenz, aber parallelen Wellenfronten, erkannt wurde bzw. durchlaufen ist, wobei der erste und der zweite Strahl den gleichen optischen Weg zurücklegen;
   - Messen der Modulationsfrequenz $\nu2$, bei welcher die Phasenverschiebung von $2\pi$ erreicht ist und Differenzbildung zur Ausgangsmodulationsfrequenz $\nu1$ nach $\Delta\nu = \nu2 - \nu1$ und
   - Bestimmung der absoluten Größe der Meßstrecke bzw. Entfernung L nach der Beziehung

   $$L = c/(2 \bullet \Delta\nu),$$

   wobei c eine Konstante und gleich der Lichtgeschwindigkeit im Medium ist.

5. Verfahren nach Anspruch 1,
**dadurch gekennzeichnet**,
daß die Strahlung des Diodenlasers mit zwei verschiedenen Frequenzen moduliert wird und daß die sich ergebende Differenzfrequenz detektiert wird.

6. Verfahren nach einem der vorhergehenden Ansprüche,
**gekennzeichnet durch**
eine Intensitätsnormierung der gewonnenen Signal auf die Strahlungsleistung am Detektor.

7. Verfahren nach Anspruch 1,
**dadurch gekennzeichnet**,
daß aus der Änderung der Größe der Meßstrecke zwischen Diodenlaser und Reflektor pro Zeiteinheit die Bewegungsgeschwindigkeit zwischen Diodenlaser und Reflektor ermittelt wird.

8. Verfahren nach Anspruch 1, 2, 3, 5 oder 7,
**dadurch gekennzeichnet**,
daß die Änderung der Größe einer Meßstrecke bzw. Entfernung zwischen Diodenlaser und Detektor bestimmt wird.

9. Anordnung zur Absolutinterferometrie mit durch Diodenlaser erzeugter Strahlung umfassend eine Steuereinheit zum Betreiben des Diodenlasers, einen Detektor, einen Modulator und einen phasenempfindlichen Detektor,

**dadurch gekennzeichnet**,

daß der Modulator (5) die Strahlung des Diodenlasers (1) derart hochfrequenzmoduliert, daß neben der Strahlung mit einer Trägerfrequenz Strahlung mit einer Seitenbandfrequenz entsteht, die Strahlung mit Trägerfrequenz und die Strahlung mit Seitenbandfrequenz eine gleiche, einzige Meßstrecke durchläuft und auf den Detektor (4) gelangt und dort interferiert, wobei der Ausgang des Detektors (4) mit dem phasenempfindlichen Detektor (6) in Verbindung steht, welchem an seinem Referenzeingang die Modulationsreferenzfrequenz des Modulators (5) zugeführt ist, wobei am Ausgang des phasenempfindlichen Detektors (6) die Phasendifferenz anliegt, die mit der Meßstrecke oder dem Abstand zwischen Diodenlaser (1) und Detektor (4) korreliert.

EP 0 646 766 A2

Frequenz Modulation     Amplituden Modulation     Modulierter Diodenlaser

Fig.1

9

$\nu_{mod}$

$\nu_1$   $\nu_2$

Laser

$\Lambda_s/2$

I

z

$\lambda_1$   Referenz
$\lambda_2$   Meßstrahl

z

1

3

4

$B \sin(\omega_{mod} t + \phi)$

5   $A \sin(\omega_{mod} t)$

PSD
in Phase   6

$C \sin(\phi)$

90°

PSD
Quadratur

8

$C \cos(\phi)$

+C

-C

$\phi$

Fig.2

Start

Stop

Fig.3